# EUROPÄISCHE PATENTANMELDUNG

(11) **EP 1 286 526 A1**
(43) Veröffentlichungstag der Anmeldung: **26.02.2003**
(21) Anmeldenummer: 01120255.3
(22) Anmeldetag: 23.08.2001
(51) Int. Cl.: H04M 7/00, H04M 3/54, H04M 3/436, H04M 3/42

(54) **Abgabe eines Kurztextinformationssignals bei Nichterreichbarkeit eines Kommunikationsteilnehmers**

(71) Anmelder: SIEMENS AKTIENGESELLSCHAFT, 80333 München (DE)
(72) Erfinder: Knaebchen, Andreas, Dr., 81377 München (DE); Petersen, Volker, 82538 Geretsried (DE)

(57) **Zusammenfassung**

Zur Abgabe eines Signals bei Nichterreichbarkeit eines Kommunikationsteilnehmers an einer Teilnehmerstelle (SUB2) eines zu einem Kommunikationsnetz gehörenden ersten Teilnetzes (NET 1), insbesondere eines Festnetzes, nach Auftreten eines für die betreffende Teilnehmerstelle bestimmten Anrufs an eine festgelegte bestimmte Stelle eines zu dem genannten Kommunikationsnetz gehörenden zweiten Teilnetzes (NET 2), insbesondere des Internets, welches über wenigstens eine Übergangseinrichtung (GW) mit dem ersten Teilnetz (NET 1) verbunden ist und in welchem Kommunikationsverbindungen von und zu einem dem betreffenden Kommunikationsteilnehmer zugeordneten Mobilfunkgerät (MOF) als Funkverbindungen herstellbar sind, wird durch eine im ersten Teilnetz (NET 1) eingerichtete Rufsignalweiterleitung von der genannten Teilnehmerstelle (SUB2) zu einem dem zweiten Teilnetz (NET 2) zugehörigen Server (SVR) sowie durch einen in diesem Server (SVR) festgelegten Informationsdienst zu der bestimmten Stelle des betreffenden zweiten Teilnetzes (NET 2) ein zumindest die Rufnummer der anrufenden Teilnehmerstelle (SUB1) umfassendes Kurztextinformationssignal übertragen.

## Beschreibung

Die Erfindung bezieht sich auf ein Verfahren zur Abgabe eines Signals bei Nichterreichbarkeit eines Kommunikationsteilnehmers an einer Teilnehmerstelle eines zu einem Kommunikationsnetz gehörenden ersten Teilnetzes, insbesondere eines Festnetzes, nach Auftreten eines für die betreffende Teilnehmerstelle bestimmten Anrufes an eine festgelegte bestimmte Stelle eines zu dem genannten Kommunikationsnetz gehörenden zweiten Teilnetzes, insbesondere eines IP-Netzes, welches über wenigstens eine Übergangseinrichtung mit dem betreffenden ersten Teilnetz verbunden ist und in welchem Kommunikationsverbindungen von und zu einem dem betreffenden Kommunikationsteilnehmer zugeordneten Mobilfunkgerät als Funkverbindungen herstellbar sind.

Üblicherweise erfolgt die Abgabe eines Signals bei Nichterreichbarkeit eines Kommunikationsteilnehmers an einer Teilnehmerstelle eines Kommunikationsnetzes der vorstehend betrachteten Art an irgendeine andere Vermittlungsstelle des betreffenden Kommunikationsnetzes, an der der betreffende Kommunikationsteilnehmer nunmehr erreichbar ist. Dieses auch als Rufsignalweiterleitung bezeichnete bekannte Verfahren führt indessen dazu, dass zu der betreffenden anderen Teilnehmerstelle des Kommunikationsnetzes sämtliche Anrufe hin geleitet werden, die an der erstgenannten Vermittlungsstelle des betreffenden Kommunikationsnetzes nicht angenommen wurden, und dass diese Anrufe zur Abgabe entsprechender akustischer Meldesignale (Klingelzeichen) an der betreffenden anderen Teilnehmerstelle führen. Dies wird zuweilen als störend empfunden, und zwar insbesondere dann, wenn der erwähnte Kommunikationsteilnehmer in dem Kommunikationsnetz per Mobilfunk erreichbar ist. Die Situation wird überdies als besonders ungünstig empfunden, wenn der betreffende Kommunikationsteilnehmer mit seinem Mobilfunkgerät im Ausland unterwegs ist.

Um Abhilfe für das vorstehend aufgezeigte Problem zu schaffen, ist es generell bekannt, eine sogenannte Mailbox-Funktion bzw. eine Anrufbeantworter-Funktion für die Vermittlungsstelle des betreffenden Kommunikationsnetzes wirksam zu machen, an der der erwähnte Kommunikationsteilnehmer bisher erreichbar war. Die durch Aktivierung dieser gerade erwähnten Funktionen gespeicherten Nachrichten können dann von dem betreffenden Kommunikationsteilnehmer per Fernabfrage abgerufen werden. Dies setzt allerdings voraus, dass eine entsprechende Nachricht vom jeweils anrufenden Kommunikationsteilnehmer abgesetzt worden ist. Hat der jeweilige anrufende Kommunikationsteilnehmer allerdings keine Nachricht hinterlassen, sondern die Verbindung kurz nach ihrer Herstellung wieder ausgelöst, so steht für die erwähnte Fernabfrage keine auswertbare Information, das heißt keine Rufnummer von dem jeweils anrufenden Kommunikationsteilnehmer zur Verfügung.

Der Erfindung liegt daher die Aufgabe zugrunde, einen Weg zu zeigen, wie bei einem Verfahren der eingangs genannten Art auf relativ einfache Weise bei Nichterreichbarkeit eines Kommunikationsteilnehmers an einer Teilnehmerstelle eines Kommunikationsnetzes nach Auftreten eines an die betreffende Teilnehmerstelle gerichteten Anrufes ein Signal an eine andere Teilnehmerstelle bzw. Stelle des betreffenden Kommunikationsnetzes abgegeben werden kann, um diese Stelle bzw. Teilnehmerstelle über den betreffenden erfolgten Anruf zu informieren, ohne indessen an dieser Stelle bzw. Teilnehmerstelle in der bisher üblichen Weise akustische Meldesignale abzugeben.

Gelöst wird die vorstehend aufgezeigte Aufgabe bei einem Verfahren der eingangs genannten Art erfindungsgemäß dadurch, dass in einem dem genannten zweiten Teilnetz zugehörigen Server ein auf eine Rufsignalweiterleitung von dem ersten Teilnetz zu dem betreffenden Server aktivierbarer bestimmter Informationsdienst festgelegt wird,
dass in dem ersten Teilnetz eine Weiterleitungsinformation darüber gespeichert wird, welcher Teilnehmerstelle dieses ersten Teilnetzes der betreffende Server für eine Rufsignalweiterleitung zugeordnet ist,
dass anhand dieser Weiterleitungsinformation eine Rufsignalinformation von einer rufenden Teilnehmerstelle zu der genannten einen Teilnehmerstelle des ersten Teilnetzes als einer anzurufenden Teilnehmerstelle dann im Rahmen einer Rufsignalweiterleitung zu dem Server des zweiten Teilnetzes weitergeleitet wird, wenn der Anruf an der genannten anzurufenden Teilnehmerstelle nicht angenommen wird,
und dass daraufhin von dem betreffenden Server im Rahmen des für die genannte Stelle eingerichteten Informationsdienstes zu der betreffenden festgelegten bestimmten Stelle ein zumindest die Rufnummer der anrufenden Teilnehmerstelle umfassendes Kurztextinformationssignal übertragen wird.

Die Erfindung bringt den Vorteil mit sich, dass auf relativ einfache Weise an einer gewünschten Stelle des Kommunikationsnetzes durch die zu dieser hin übertragenen Kurztextinformation, die zumindest die Rufnummer der jeweils anrufenden Teilnehmerstelle umfasst, eine ausreichende Information über die jeweilige anrufende Teilnehmerstelle bereitgestellt werden kann, ohne den eingangs aufgezeigten Nachteil der Störung durch Abgabe akustischer Meldesignale, wie sie bei der herkömmlichen Rufsignalweiterleitung auftreten, in Kauf nehmen zu müssen.

Vorzugsweise erfolgt bei dem Verfahren gemäß der Erfindung die Rufsignalweiterleitung sofort, wenn der Anruf an einer genannten anzurufenden Teilnehmerstelle nicht angenommen wird.

Es ist aber auch möglich, dass die betreffende Rufsignalweiterleitung erst eine bestimmte Zeitspanne nach Nichtannahme des Anrufes an der genannten anzurufenden Teilnehmerstelle erfolgt oder aber erst dann erfolgt, nachdem eine bestimmte festgelegte Anzahl von Anrufsignalen an die genannte anzurufende Teilnehmerstelle abgegeben worden ist. In diesen beiden Fällen hat somit ein Kommunikationsteilnehmer an der betreffenden anzurufenden Teilnehmerstelle die Möglichkeit, trotz einer eingerichteten Rufsignalweiterleitung einen ankommenden Ruf entgegenzunehmen.

Zweckmäßigerweise wird mit dem beim Verfahren gemäß der Erfindung übertragenen Kurztextinformationssignal eine kurze Textinformation (z.B. eine sogenannte SMS - aus dem Englischen short message service) an das genannte Mobilfunkgerät als der Stelle übertragen, die in dem erwähnten Server als die Stelle für den Empfang des betreffenden Kurztextinformationssignals festgelegt ist.

Alternativ oder zusätzlich zu der zuletzt betrachteten Maßnahme kann gemäß weiterer zweckmäßiger Ausgestaltung der Erfindung als Kurztextinformationssignal ein E-Mail an ein zuvor festgelegtes elektronisches Postfach übertragen werden. Hierdurch besteht die vorteilhafte Möglichkeit, von einer mit einer PC-Funktion ausgestatteten Teilnehmerstelle des Kommunikationsnetzes auf das betreffende elektronische Postfach zuzugreifen und das dort elektronisch abgespeicherte jeweilige Kurztextinformationssignal abzurufen, das zumindest die Rufnummer der jeweilige anrufenden Teilnehmerstelle umfasst.

Alternativ oder zusätzlich zu den zuletzt betrachteten beiden zweckmäßigen Weiterbildungen des Verfahrens gemäß der Erfindung ist es auch möglich, das Kurztextinformationssignal in einem Serverspeicher zu speichern. Auf diese Weise lassen sich in dem betreffenden Serverspeicher sämtliche während des eingerichteten Rufsignalweiterleitungsbetriebs zu einer Stelle bzw. Teilnehmerstelle des Kommunikationsnetzes hin erfolgenden Anrufe akkumulieren und von irgendeiner Vermittlungsstelle oder Stelle des Kommunikationsnetzes komplett abrufen.

Vorzugsweise wird auf die Einrichtung des genannten bestimmten Informationsdienstes in dem genannten Server eine Selektion hinsichtlich der Rufnummern von anrufenden Teilnehmerstellen vorgenommen. Dazu erfolgt vorzugsweise eine positive Selektion, gemäß der lediglich auf Anrufe mit festgelegten Rufnummern ein Kurztextinformationssignal übertragen wird, oder es erfolgt alternativ eine Negativselektion, gemäß der auf Anrufe mit festgelegten Rufnummern hin eine Übertragung eines kurzen Textinformationssignals unterbleibt. In jedem Falle lässt sich auf diese Weise die durch die Übertragung der Kurztextinformationssignale anfallende Informationsmenge in wünschenswerter Weise einschränken. Dabei kann auch eine Grobselektion durch Vorgabe von Teilnummern erfolgen, also nicht von vollständigen Rufnummern, sondern nur eines Teiles solcher Rufnummern.

Zweckmäßigerweise werden die innerhalb einer bestimmten Zeitspanne in dem Server angefallenen Weiterleitungsinformationen von einer beliebigen Teilnehmerstelle des Kommunikationsnetzes abgerufen. Auf diese Weise lässt sich eine zeitlich gegliederte Historie der aufgetretenen Anrufe erzielen.

Zweckmäßigerweise wird die Rufnummer einer anrufenden Teilnehmerstelle der im Zuge des eingerichteten Informationsdienstes an die genannte festgelegte bestimmte Stelle übertragenen Kurztextinformation für den Aufbau einer Verbindung von der diese Kurztextinformation enthaltenen Stelle, insbesondere einer Mobilfunkteilnehmerstelle, zu der betreffenden anrufenden Teilnehmerstelle herangezogen. Durch diese Funktion, die im Englischen Click-to-dial-Funktion genannt wird, kann auf besonders bequeme Weise eine Verbindung zwischen der erwähnten Stelle und der betreffenden Teilnehmerstelle hergestellt werden, die ursprünglich angerufen hatte.

Anhand einer Zeichnung wird das Verfahren gemäß der Erfindung nachstehend beispielsweise näher erläutert.

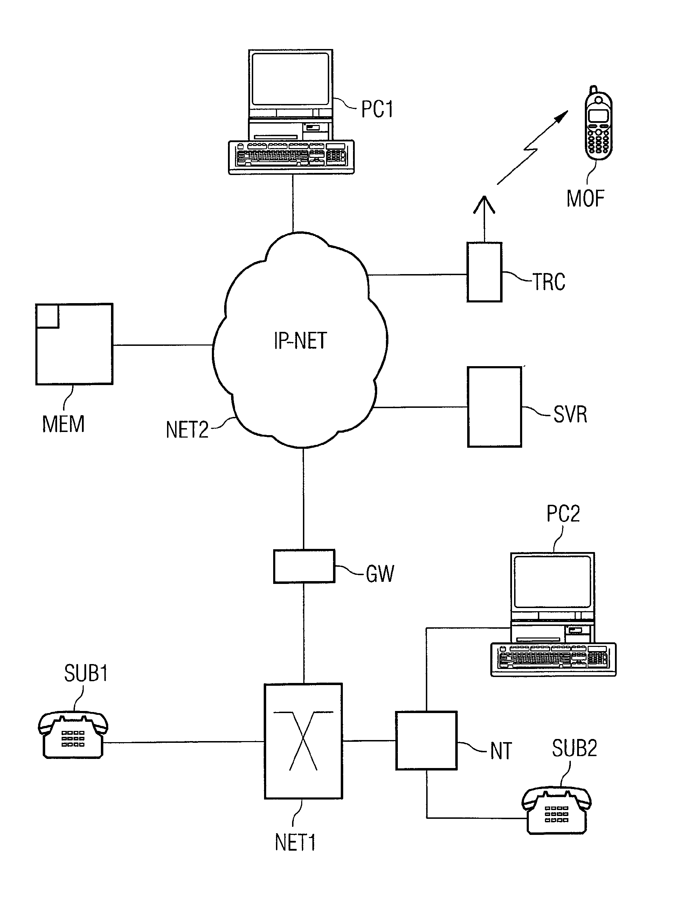

In der Zeichnung ist ein Kommunikationsnetz angedeutet, zu dem zwei Teilnetze NET 1 und NET 2 gehören. Das eine Teilnetz NET 1 ist durch ein Netz gegeben, bei dem es sich beispielsweise um ein Festnetz, wie das kommerziell eingeführte Vermittlungssystem EWSD handeln kann; das betreffende Netz NET 1 kann aber auch ein IP-Netz sein, also ein Internetprotokoll-basiertes Netz. Das andere, zweite Teilnetz NET 2 ist durch ein Internetprotokoll-basiertes Netz IP-NET gegeben, welches mit dem erstgenannten Teilnetz NET 1 über wenigstens eine Übergangsseinrichtung (im Englischen Gateway) GW verbunden ist. Das zweite Teilnetz NET 2 kann beispielsweise das derzeit verfügbare Internet sein.

Mit dem das erste Teilnetz des Kommunikationsnetzes darstellenden Netz NET 1 ist eine Vielzahl von Teilnehmerstellen verbunden, von denen in der Zeichnung lediglich zwei Teilnehmerstellen SUB1 und SUB2 angedeutet sind. Die Teilnehmerstelle SUB1 kann beispielsweise eine analoge Teilnehmerstelle sein und die Teilnehmerstelle SUB2 kann beispielsweise eine ISDN-Teilnehmerstelle sein, die über ein Netzabschlussgerät NT an dem Teilnetz NET 1 angeschlossen ist. Außerdem kann der Teilnehmerstelle SUB2 ein Personalcomputer PC2 zugehörig sein, der ebenfalls über das Netzabschlussgerät NT an dem Teilnetz NET 2 angeschlossen ist.

An dem zweiten Teilnetz NET 2 kann ebenfalls eine Vielzahl von Teilnehmerstellen angeschlossen sein. Im vorliegenden Fall sind ein Personalcomputer PC1, ein Server SVR, ein gesonderter Speicher MEM und eine Sende-Empfangs-Einrichtung TRC angedeutet, über die Funkverbindungen zu und von Mobilfunkgeräten hergestellt werden können, die mobile Kommunikationsteilnehmerstellen darstellen. In der Zeichnung ist lediglich ein derartiges Mobilfunkgerät MOF angedeutet.

Nachdem das in der Zeichnung dargestellte Kommunikationsnetz und die mit diesem verbundenen Vorrichtungen in dem für das Verständnis der vorliegenden Erfindung ausreichenden Umfang erläutert worden sind, soll nunmehr das Verfahren gemäß der Erfindung erläutert werden. In diesem Zusammenhang wird davon ausgegangen, dass von der Teilnehmerstelle SUB1 als einer rufenden Teilnehmerstelle eine Verbindung über das Teilnetz NET 1 zur Teilnehmerstelle SUB2 hergestellt werden soll. Der Kommunikationsteilnehmer, der normalerweise an der Teilnehmerstelle SUB2 erreichbar ist, sei aber annahmegemäß dort nicht mehr erreichbar, sondern er sei derzeit lediglich über das in der Zeichnung angedeutete Mobilfunkgerät MOF erreichbar.

Damit der gerade erwähnte Kommunikationsteilnehmer, dem das Mobilfunkgerät MOF zugehörig ist, Kenntnis erlangt von den Anrufen, die nach wie vor an die Teilnehmerstelle SUB2 gerichtet werden, wird wie folgt vorgegangen. Zunächst wird in dem dem zweiten Teilnetz NET 2 zugehörigen Server SVR ein bestimmter Informationsdienst eingerichtet, der eine Rufsignalweiterleitung von dem ersten Teilnetz NET 1 zu einer bestimmten Stelle des zweiten Teilnetzes NET 2 festlegt. Im vorliegenden Fall sei diese gerade erwähnte Stelle das Mobilfunkgerät MOF. Die Festlegung des betreffenden bestimmten Informationsdienstes kann dabei beispielsweise von dem mit dem ersten Teilnetz NET 1 verbundenen Personalcomputer PC1 oder von dem mit dem zweiten Teilnetz NET 2 verbundenen Personalcomputer PC2 erfolgen. Es ist aber auch möglich, dass die Einrichtung des betreffenden bestimmten Informationsdienstes in dem Server SVR mittels des Mobilfunkgeräts MOF über die Sende-Empfangs-Einrichtung TRC und das zweite Teilnetz NET 2 erfolgt.

Zusätzlich zu dieser Festlegung des erwähnten bestimmten Informationsdienstes in dem Server SVR wird in dem ersten Teilnetz NET 1 eine Weiterleitungsinformation darüber gespeichert, dass die Teilnehmerstelle SUB2 dieses ersten Teilnetzes dem Server SVR zugeordnet ist. Die betreffende Weiterleitungsinformation kann dazu in dem Signalisierungs-Steuerbereich des ersten Teilnetzes NET 1 gespeichert werden.

Tritt nun bei der Teilnehmerstelle SUB2 ein Anruf beispielsweise von der Teilnehmerstelle SUB1 als einer anrufenden Teilnehmerstelle auf und kann dieser Anruf an der Teilnehmerstelle SUB2 als einer anzurufenden Teilnehmerstelle nicht angenommen werden, so wird anhand der vorstehend erwähnten Weiterleitungsinformation die Rufsignalinformation von der gerade rufenden Teilnehmerstelle SUB1 zu der zuvor betrachteten Teilnehmerstelle SUB2 des ersten Teilnetzes NET 1 im Rahmen einer Rufsignalweiterleitung bzw. Rufsignalumleitung zu dem Server SVR des zweiten Teilnetzes NET 2 weitergeleitet. Diese Weiterleitung kann dabei entweder sofort erfolgen, wenn der Anruf an der genannten anzurufenden Teilnehmerstelle SUB2 nicht angenommen wird, oder aber die betreffende Rufsignalum- bzw. Rufsignalweiterleitung erfolgt erst eine bestimmte Zeitspanne nach Nichtannahme des Anrufes an der genannten anzurufenden Teilnehmerstelle SUB2 oder sie erfolgt erst, nachdem eine bestimmte festgelegte Anzahl von Anrufsignalen an die genannte anzurufende Teilnehmerstelle SUB2 abgegeben worden ist.

Daraufhin wird von dem genannten Server SVR im Zuge des für die genannte Stelle, also im vorliegenden Fall für das Mobilfunkgerät MOF eingerichteten Informationsdienstes zu der betreffenden festgelegten bestimmten Stelle, also dem Mobilfunkgerät MOF ein Kurztextinformationssignal übertragen, welches zumindest die Rufnummer der jeweiligen anrufenden Teilnehmerstelle, wie der Teilnehmerstelle SUB1, enthält. Vorzugsweise enthält das betreffende Kurztextinformationssignal aber auch noch weitere Informationen, wie das Datum und die Uhrzeit des betreffenden Anrufs, der an der Teilnehmerstelle SUB2 nicht angenommen worden ist.

Das beim zuvor betrachteten Beispiel dem Mobilfunkgerät MOF über die Sende-Empfangs-Einrichtung TRC zugeführte Kurztextinformationssignal kann beispielsweise eine kurze Textinformation sein, wie sie seit einiger Zeit von und zu Mobilfunkgeräten unter der Bezeichnung SMS (aus dem Englischen: short message service) übertragen wird.

Als Ergänzung oder Alternative zu der vorstehend betrachteten Übertragung eines Kurztextinformationssignals kann dieses als E-Mail an ein zuvor festgelegtes elektronisches Postfach übertragen werden, welches entweder selbst in dem Server SVR eingerichtet ist oder für das beispielsweise der in der Zeichnung angedeutete Speicher MEM verfügbar sein kann. In einem Serverspeicher beispielsweise des gerade erwähnten Servers SVR oder eines weiteren Servers kann das jeweilige Kurztextinformationssignal aber auch gespeichert werden. Dies ermöglicht dann einen Komplettabruf der in dem betreffenden Serverspeicher gespeicherter Kurztextinformationssignale von einer beliebigen Stelle des vorhandenen Kommunikationsnetzes aus, beispielsweise mittels eines der angedeuteten Personalcomputer PC1, PC2.

Im Zuge der Weiterleitung des jeweiligen Kurztextinformationssignals zu der durch den jeweils eingerichteten Informationsdienst festgelegten Stelle kann vorzugsweise eine Selektion hinsichtlich der Rufnummern von anrufenden Teilnehmerstellen vorgenommen werden, und zwar entweder eine Positivselektion, durch die lediglich auf Anrufe mit festgelegten Rufnummern hin Kurztextinformationssignale übertragen werden, oder eine Negativselektion, durch die auf Anrufe mit festgelegten Rufnummern hin jeweils eine Übertragung eines Kurztextinformationssignals unterbleibt. Durch diese Maßnahmen lässt sich die Anzahl der zu der jeweils festgelegten Stelle zu übertragenden Kurztextinformationssignale begrenzen, so dass lediglich die im Einzelfall wirklich wichtigen Kurztextinformationssignale übertragen werden.

Zusätzlich oder alternativ zu den vorstehend erläuterten Selektionsmaßnahmen können die innerhalb einer bestimmten Zeitspanne in dem Server SVR angefallenen Weiterleitungsinformationen von einer beliebigen Teilnehmerstelle des Kommunikationsnetzes abgerufen werden, beispielsweise von dem Personalcomputer PC1 oder dem Personalcomputer PC2, oder von dem Mobilfunkgerät MOF. Dadurch lässt sich auf einfache Weise ein Überblick über das Anrufgeschehen innerhalb einer bestimmten festgelegten Zeitspanne bei einer Teilnehmerstelle gewinnen, deren Kommunikationsteilnehmer an dieser Teilnehmerstelle nicht erreichbar ist.

Mit Rücksicht darauf, dass das jeweilige Kurztextinformationssignal zumindest die Rufnummer der jeweils anrufenden Teilnehmerstelle umfasst, ist es zweckmäßig, die Rufnummer der jeweiligen anrufenden Teilnehmerstelle aus der an die jeweils festgelegte bestimmte Stelle, wie das Mobilfunkgerät MOF übertragenen Kurztextinformation für den Aufbau einer Verbindung von dieser Stelle bzw. von diesem Mobilfunkgerät zu der betreffenden Teilnehmerstelle zu nutzen, die angerufen hatte. Diese im Englischen als Click-to-dial-Funktion bezeichnete Funktion erleichtert somit die zwischen zumindest zwei Kommunikationsteilnehmern herzustellende gewünschte Verbindung, die zunächst nicht hergestellt werden konnte.

Durch das erfindungsgemäße Verfahren ist somit sichergestellt, dass diejenige Stelle bzw. Teilnehmerstelle innerhalb eines Kommunikationsnetzes, die als Empfangseinrichtung für die zuvor betrachteten Kurztextinformationssignale bestimmt ist, nicht durch lästige Anrufe (akustische Meldungen) infolge der Einrichtung des Rufsignalweiterleitungsbetriebs gestört wird, dennoch aber die notwendigen Informationen über anrufende Teilnehmerstellen erhalten kann.

Abschließend sei noch angemerkt, dass für die Übertragung der verschiedenen erläuternden Ruf- und Rufsignalweiterleitungssignale sowie der Kurztextinformationssignale das in Kommunikationsnetzen der betrachteten Art eingesetzte bekannte Signalisierungsverfahren Nr. 7 benutzt werden kann. Grundsätzlich können aber auch andere Signalisierungsverfahren angewandt werden.

## Patentansprüche

1. Verfahren zur Abgabe eines Signals bei Nichterreichbarkeit eines Kommunikationsteilnehmers an einer Teilnehmerstelle (SUB2) eines zu einem Kommunikationsnetz gehörenden ersten Teilnetzes (NET 1), insbesondere eines Festnetzes, nach Auftreten eines für die betreffende Teilnehmerstelle (SUB2) bestimmten Anrufes an eine festgelegte bestimmte Stelle eines zu dem genannten Kommunikationsnetz gehörenden zweiten Teilnetzes (NET 2), insbesondere eines IP-Netzes, welches über wenigstens eine Übergangseinrichtung (GW) mit dem betreffenden ersten Teilnetz (NET 1) verbunden ist und in welchem Kommunikationsverbindungen von und zu einem dem betreffenden Kommunikationsteilnehmer zugeordneten Mobilfunkgerät (MOF) als Funkverbindungen herstellbar sind,
**dadurch gekennzeichnet, dass** in einem dem genannten zweiten Teilnetz (NET 2) zugehörigen Server (SVR) ein auf eine Rufsignalweiterleitung von dem ersten Teilnetz (NET 1) zu dem betreffenden Server (SVR) aktivierbarer bestimmter Informationsdienst festgelegt wird,
dass in dem ersten Teilnetz (NET 1) eine Weiterleitungsinformation darüber gespeichert wird, welcher Teilnehmerstelle (SUB2) dieses ersten Teilnetzes (NET 1) der betreffende Server (SVR) für eine Rufsignalweiterleitung zugeordnet ist, dass anhand dieser Weiterleitungsinformation eine Rufsignalinformation von einer rufenden Teilnehmerstelle (SUB1) zu der genannten einen Teilnehmerstelle (SUB2) des ersten Teilnetzes (NET 1) als einer anzurufenden Teilnehmerstelle (SUB2) dann im Rahmen einer Rufsignalweiterleitung zu dem Server (SVR) des zweiten Teilnetzes (NET 2) weitergeleitet wird, wenn der Anruf an der genannten anzurufenden Teilnehmerstelle (SUB2) nicht angenommen wird,
und dass daraufhin von dem betreffenden Server (SVR) im Rahmen des für die genannte Stelle (MOF) eingerichteten Informationsdienstes zu der betreffenden festgelegten bestimmten Stelle (MOF) ein zumindest die Rufnummer der anrufenden Teilnehmerstelle (SUB1) umfassendes Kurztextinformationssignal übertragen wird.

2. Verfahren nach Anspruch 1, **dadurch gekennzeichnet, dass** die Rufsignalweiterleitung sofort erfolgt, wenn der Anruf an der genannten anzurufenden Teilnehmerstelle (SUB2) nicht angenommen wird.

3. Verfahren nach Anspruch 1, **dadurch gekennzeichnet, dass** die Rufsignalweiterleitung eine bestimmte Zeitspanne nach Nichtannahme des Anrufes an der genannten anzurufenden Teilnehmerstelle (SUB2) erfolgt.

4. Verfahren nach Anspruch 1, **dadurch gekennzeichnet, dass** die Rufsignalweiterleitung erfolgt, nachdem eine bestimmte festgelegte Anzahl von Anrufsignalen an die genannte anzurufende Teilnehmerstelle (SUB2) abgegeben worden ist.

5. Verfahren nach einem der Ansprüche 1 bis 4, **dadurch gekennzeichnet, dass** in dem Kurztextinformationssignal eine kurze Textinformation (z.B. eine SMS) an das genannte Mobilfunkgerät (MOF) übertragen wird.

6. Verfahren nach einem der Ansprüche 1 bis 5, **dadurch gekennzeichnet, dass** als Kurztextinformationssignal ein E-Mail an ein zuvor festgelegtes elektronisches Postfach übertragen wird.

7. Verfahren nach einem der Ansprüche 1 bis 6, **dadurch gekennzeichnet, dass** das Kurztextinformationssignal in einem Serverspeicher (z.B. MEM) gespeichert wird.

8. Verfahren nach einem der Ansprüche 1 bis 7, **dadurch gekennzeichnet, dass** auf die Einrichtung des genannten bestimmten Informationsdienstes in dem genannten Server (SVR) eine Selektion hinsichtlich der Rufnummern von anrufenden Teilnehmerstellen erfolgt.

9. Verfahren nach Anspruch 8, **dadurch gekennzeichnet, dass** eine Positivselektion erfolgt, gemäß der lediglich auf Anrufe mit festgelegten Rufnummern jeweils ein Kurztextinformationssignal übertragen wird.

10. Verfahren nach Anspruch 8, **dadurch gekennzeichnet, dass** eine Negativselektion erfolgt, gemäß der auf Anrufe mit festgelegten Rufnummern hin jeweils eine Übertragung eines Kurztextinformationssignals unterbleibt.

11. Verfahren nach einem der Ansprüche 1 bis 10, **dadurch gekennzeichnet, dass** die innerhalb einer bestimmten Zeitspanne in dem Server (SVR) angefallenen Weiterleitungsinformationen von einer beliebigen Teilnehmerstelle (z.B. PC1, PC2) des Kommunikationsnetzes abgerufen werden.

12. Verfahren nach einem der Ansprüche 1 bis 11, **dadurch gekennzeichnet, dass** die Rufnummer einer anrufenden Teilnehmerstelle (SUB1) der im Zuge des eingerichteten Informationsdienstes an die genannte festgelegte bestimmte Stelle (MOF) übertragenen Kurztextinformation für den Aufbau einer Verbindung von der diese Kurztextinformation erhaltenden Stelle (MOF) zu der betreffenden anrufenden Teilnehmerstelle (SUB1) herangezogen wird
